# EUROPÄISCHE PATENTSCHRIFT

(11) **EP 1 194 383 B1**
(45) Veröffentlichungstag und Bekanntmachung des Hinweises auf die Patenterteilung: **06.04.2005**
(21) Anmeldenummer: 00949348.7
(22) Anmeldetag: 14.07.2000
(51) Int. Cl.: C02F 11/12, B01D 33/00

(54) **VORRICHTUNG ZUM ENTWÄSSERN VON SCHLAMM**
DEVICE FOR DEHYDRATING SLUDGE
DISPOSITIF DE DESHYDRATATION DES BOUES

(30) Priorität: 15.07.1999 DE 19932416
(43) Veröffentlichungstag der Anmeldung: 10.04.2002
(73) Patentinhaber: Hans Huber AG Maschinen- und Anlagenbau, 92334 Berching (DE)
(72) Erfinder: SCHREIBER, Thomas, D-92342 Freystadt (DE)
(74) Vertreter: Bergmeier, Werner, Dipl.-Ing.
(86) Internationale Anmeldenummer: PCT/EP2000/006747
(87) Internationale Veröffentlichungsnummer: WO 2001/005718

(56) Entgegenhaltungen:
- EP-A- 0 425 757
- EP-A- 0 615 957
- BE-A- 564 675
- DE-A- 2 747 506
- FR-A- 2 729 383
- US-A- 2 802 572

## Beschreibung

Die vorliegende Erfindung betrifft eine Vorrichtung zum Entwässern von Schlamm, insbesondere Dünnschlämmen, gemäß dem Oberbegriff des Patentanspruchs 1.

Bei der Aufbereitung von Abwässern, insbesondere in Kläranlagen, fallen verschiedene Schlämme, wie Rückführschlamm, Faulschlamm oder Frischschlamm usw., an. Diese besitzen mitunter einen sehr hohen Wassergehalt, den es gilt zu reduzieren. Durch das Reduzieren des Wassergehaltes wird insbesondere die Handhabung des Schlammes wesentlich vereinfacht, ebenso werden beispielsweise die Deponiekosten deutlich reduziert. Für die Aufkonzentration von Schlämmen werden insbesondere auch maschinentechnische Systeme eingesetzt. Für die maschinelle Aufkonzentration der Schlämme wird meist eine Konditionierung des Schlammes mit Polyelektrolyten (Flockungshilfsmitteln) angewandt. Diese bewirken ein Ausflocken der so behandelten Schlämme, so daß die Abtrennung und Filtration des freien Überstandswassers besser möglich ist. Durch die maschinentechnischen Systeme in Verbindung mit der Konditionierung des Schlammes mit Polyelektrolyten ist in der Regel eine Volumenverringerung um ca. 80% - 90% möglich. Dadurch ist es insbesondere auch möglich nachfolgende Verfahrensschritte bei der Abwasserreinigung kostengünstiger und effektiver zu gestalten.

Aus der DE 39 42 561 C1 ist eine kontinuierlich und automatisch arbeitende Vorrichtung zum Entwässern eines mit einem Flockenhilfsmittel (z.B. Polyelektrolyt) versetzten Schlammes bekannt. Bei diesem System, das mittels einer Transportschnecke arbeitet, wird konditionierter Schlamm in ein zylindrisches Spaltsieb geleitet und dort mittels der Transportschnecke kontinuierlich vom Zulauf des Siebzylinders bis zum Auswurf des Siebzylinders transportiert. Die Aufstellung der Vorrichtung erfolgt mit einem Winkel von ca. 30° zwischen Einlauf und Austrag, wodurch der geflockte Schlamm mit der Transportschnecke kontinuierlich angehoben wird. Neben dem Transport findet auch eine Umwälzung des geflockten Schlammes statt, wodurch der Austritt des Filtratwassers durch das Spaltsieb nach Außen verstärkt wird. Die mitgeführten Feststoffe verbleiben im Zylinder und werden an dessen Ende über eine Schurre ausgeschieden. Die Filtrationszeit wird über die Transportgeschwindigkeit der Schnecke geregelt.

Bei zentrifugalen Systemen zur Abtrennung von Wasser aus Schlämmen wird meist auch eine Konditionierung des Schlammes gemacht. Bei diesen Systemen wird mit hohen Rotationsgeschwindigkeiten gearbeitet, wodurch sich Feststoffe am Siebmantel der Zentrifuge absetzen. Das abgeschiedene Wasser sammelt sich im Zentrum des Siebmantels und fließt über ein Auslaufrohr aus dem Mantel heraus. Der Feststoff wird durch den Rotor der Zentrifuge über ein Stauwehr aus dem Mantel transportiert. Daneben sind auch Vorrichtungen mit rotierenden Siebtrommeln bekannt. Der geflockte Schlamm wird zentrisch in eine Siebtrommel eingeleitet, wobei durch die Rotation der Siebtrommel in Verbindung mit sogenannten Transportschikanen eine Umwälzung des geflockten Schlammes stattfindet. Das Überstandswasser tritt durch die Sieboberfläche der Trommel nach Außen, wobei sich der Feststoff in der Trommel aufkonzentriert. Durch die Rotation der Trommel wird der Feststoff durch die eingebauten Schikanen, die einen Vorschub erzeugen, am anderen Ende der Trommel ausgeworfen. Diese Siebtrommeln werden mit verschiedenen Neigungen zwischen 0° und 10° ihrer Achse eingebaut.

Weiterhin sind Bandfiltersysteme bekannt, die auch als Bandeindicker oder Seihbänder bezeichnet werden. Auch diese arbeiten mit mittels Polyelektrolyten konditioniertem Schlamm. Der geflockte Schlamm wird auf einem Polyester-Bandtuch aufgebracht und verteilt. Durch Gravitation filtriert das Überstandswasser durch das Siebband, wobei sich der Feststoff auf dessen Oberfläche ablagert. Durch den Vortrieb des Filtertuches über Walzen und beispielsweise mittels anderer Einbauten, wie beispielsweise Schikanen, findet eine Aufkonzentration des Schlammes statt. Durch den Vortrieb des bandförmigen Filtertuches bewegt sich der Schlamm entlang der Eindickungsstrecke und wird, nachdem er aufkonzentriert ist, in einen Trichter abgeworfen.

Die bekannten Vorrichtungen haben den Nachteil, daß sie konstruktiv sehr aufwendig sind und einen hohen Platzbedarf haben.

Aus der DE-A 27 47 506 ist ein Verfahren zum Trocknen von pastösen, wäßrigen Schlämmen bekannt, wobei auf einer horizontal ausgerichteten Siebfläche der Schlamm ausgebreitet und mit warmen Abgasen in Kontakt gebracht wird. Der Schlamm wird bei dem Drehen der Siebfläche mit verschiedenen Werkzeugen, die in die Schlammoberfläche eingreifen, behandelt.

Aus der BE-A 564 675 ist eine Vorrichtung zum Entwässern von Schlamm bekannt, bei der der Schlamm auf in einem Kasten angeordneten rechteckigen Siebflächen aufgebracht wird, die mittels Vibrationen in Bewegung versetzt werden. Der Kasten kann dabei durch unterschiedlich hohe Stützen in geneigter Stellung aufgestellt werden.

Aufgabe der vorliegenden Erfindung ist es, eine Vorrichtung zum Entwässern von Schlamm, insbesondere Dünnschlämmen, derart auszugestalten, daß eine Vorrichtung geschaffen wird, die platzsparend und einfach ausgebildet ist und insbesondere bei konditionierten Schlämmen eine gute Trennung zwischen Flüssigkeiten und Feststoffen gewährleistet. Diese Aufgabe wird erfindungsgemäß durch die Merkmale der Vorrichtung gemäß Patentanspruch 1 gelöst.

Durch die erfindungsgemäße Ausgestaltung der Vorrichtung zum Entwässern von Schlamm wird vorteilhaft erreicht, daß diese kompakt und kostengünstig gestaltet werden kann. Die kreisförmige Ausgestaltung der Siebfläche ermöglicht eine günstige Ausnutzung der Fläche und damit einen geringen Platzbedarf und gleichzeitig einen geringen Materialaufwand. Durch die drehbare Ausgestaltung ist es möglich mit nur einem bewegten Teil den zu entwässernden Schlamm in der Vorrichtung zu transportieren und gleichzeitig den entwässerten Schlamm wieder aus der Vorrichtung herauszuführen. Weiterhin gestattet diese Ausführungsform gleichzeitig andere mit der Vorrichtung zusammenarbeitende Bauteile besonders kurz und platzsparend auszugestalten. Durch Ausgestaltung der Siebfläche im Verhältnis zur Horizontalen geneigten Achse wird erreicht, daß auch Wasser bzw. Flüssigkeiten ganz allgemein, das sich auf der Oberfläche des Schlamms abgesetzt hat, vom Schlamm getrennt werden kann. Diese fließt entsprechend dem Gefälle ab.

In vorteilhafter Weiterbildung der Erfindung besitzt die Vorrichtung eine Antriebsvorrichtung, wodurch das Drehen der Siebfläche und damit ein Transport des entwässerten Schlammes besonders einfach möglich ist. Vorteilhaft erfolgt die Lagerung der Siebfläche über eine Welle, die senkrecht zur Siebfläche angeordnet ist. Besonders günstig ist diese im Zentrum der kreisförmigen Siebfläche angeordnet. Darüber hinaus hat sie den Vorteil, daß die Siebfläche über die Welle auch in Drehung versetzt, also angetrieben, werden kann. In einer anderen günstigen Ausgestaltung der Erfindung ist die Siebfläche über ihren Rand, beispielsweise an Führungen des Gehäuses drehbar gelagert und vorteilhaft kann sie ebenfalls über ihren Rand angetrieben, also in Drehung versetzt werden.

Günstigerweise besitzt die Vorrichtung eine Zuführung für Schlamm und ebenso eine Entnahme für abgetrenntes Wasser. Ebenfalls ist es besonders günstig eine Abführung für den entwässerten Schlamm vorzusehen. Dadurch wird erreicht, daß die Vorrichtung kontinuierlich arbeiten kann. Darüber hinaus ermöglicht dies auch, daß die Vorrichtung in einer automatischen Anlage eingesetzt werden kann. Vorteilhaft wird dabei die Zuführung für den Schlamm oberhalb der Siebfläche angeordnet und die Entnahme für das abgetrennte Wasser unterhalb der Siebfläche, wodurch die natürliche Schwerkraft zur Entwässerung des Schlammes ausgenutzt wird. Durch die über den Umfang verteilte Anordnung von Zuführung und Entnahme wird erreicht, daß eine sichere Trennung zwischen Wasser und Feststoffen stattfinden kann. Dazu besitzt der Behälter, in dem vorteilhaft die Siebfläche angeordnet ist, jeweils eine Durchbrechung. In vorteilhafter Weiterbildung der Erfindung besitzt der Behälter einen Deckel, wodurch der Schlamm gegenüber seiner Umgebung abgetrennt behandelt werden kann. Dies ist insbesondere bei einem Einsatz der Vorrichtung in geschlossenen Räumen vorteilhaft, da Schlämme auch gesundheitsschädliche Anteile mitführen können.

In besonders vorteilhafter Weiterbildung der Erfindung wird die Antriebsvorrichtung über den Deckel gelagert, wodurch eine einfache und kostengünstige Ausgestaltung der Vorrichtung ermöglicht wird. Durch die schwenkbare Ausgestaltung des Behälters im Verhältnis zur Horizontalen kann damit eine Neigung der Siebfläche mit den damit verbundenen Vorteilen erreicht werden und gleichzeitig der Behälter über nur eine Seite, in der dann das abgetrennte Wasser zusammenläuft, vom Wasser entleert werden. In vorteilhafter Weiterbildung der Erfindung besitzt der Behälter dazu Stützen, die die gesamte Vorrichtung tragen, wobei dann durch Verändern der Stützen eine Verstellbarkeit der Neigung der Achse erreicht wird. In günstiger Ausgestaltung ist dabei die Verstellbarkeit derart ausgestaltet, daß Neigungen der Achse der Siebfläche zwischen 0° und 30° zur Senkrechten ermöglicht werden können. In günstiger Weiterbildung der Erfindung besteht die Siebfläche aus einer Trägerfläche, die ihrerseits mit dem eigentlichen Sieb belegt ist. Dadurch ist es möglich die Siebfläche kostengünstig auszugestalten, da die Funktion der mechanischen Stabilität und die eines Siebes, nämlich Schmutzteilchen auszusondern, voneinander getrennt werden. In besonders vorteilhafter Weiterbildung der Erfindung besteht das Sieb aus einer Microsieb-Bespannung, die über die Trägerfläche der Siebfläche aufgezogen ist. In einer anderen günstigen Ausgestaltung der Erfindung besteht das Sieb aus einer Polyestertuch-Bespannung. Ebenso kann auch ein gesintertes, vorgespanntes Microsieb ohne Trägerfläche eingesetzt werden.

In einer kostengünstigen Ausführungsform besteht die Trägerfläche aus einem Lochblech, was gleichzeitig genügende mechanische Stabilität, eine kostengünstige Ausgestaltung und eine Funktionssicherheit gewährleistet. Dieses.ist dabei besonders vorteilhaft aus einem korrosionsfestem Material, z.B. einem korrosionsfestem Stahl (Edelstahl) ausgebildet. In besonders günstiger Weiterbildung der Erfindung ist der Siebfläche ein Abstreifer zugeordnet, der z.B. einfach stationär angeordnet werden kann und wobei durch die Drehung der Siebfläche der entwässerte Schlamm von der Siebfläche auf einfache Weise abgetrennt wird. Der Abstreifer kann dabei vorteilhaft mit Bürsten versehen sein oder eine Abstreiflippe besitzen, die beispielsweise vorteilhaft aus Gummi oder einem anderen geeigneten Werkstoff, z.B. Kunststoff, ausgestaltet ist.

In besonders günstiger Weiterbildung der Erfindung besitzt die Siebfläche eine Reinigungsvorrichtung, wodurch vorteilhaft erreicht wird, daß sich die Siebfläche durch die festen Bestandteile des Schlammes nicht zusetzen kann bzw. diese wieder entfernt werden können und dadurch die Funktionssicherheit der Vorrichtung erhöht wird. In besonders vorteilhafter Weiterbildung der Erfindung ist die Reinigungsvorrichtung als Spritzdüsensystem ausgebildet, wodurch eine sichere Funktion gewährleistet wird und vorteilhaft keine zusätzlichen Maßnahmen oder Mittel eingesetzt werden müssen. Der Einfachheit halber kann günstigerweise für den Betrieb der Spritzdüsen das abgetrennte Wasser verwendet werden. Durch die besonders günstige Anordnung der Reinigungsvorrichtung, in Bewegungsrichtung der Siebfläche betrachtet, nach dem Abstreifer und damit vor der Zuführung für Schlamm wird erreicht, daß bevor neuer Schlamm auf die Siebfläche aufgebracht wird, diese gereinigt wird, damit der Durchtritt des Wassers und damit eine Entwässerung des Schlamms sicher gewährleistet ist. Dazu wird vorteilhaft die Reinigungsvorrichtung unterhalb der Siebfläche angeordnet, da damit eine besonders gute Reinigung der Öffnungen der Siebfläche gewährleistet wird.

In weiterer vorteilhafter Weiterbildung der Erfindung ist die Siebfläche mit einer Pressvorrichtung, die vorteilhaft als Walze ausgestaltet ist, ausgestattet. Diese liegt auf dem Schlamm auf um diesen dadurch unter Druck zu setzen, so daß weiteres Wasser abgeschieden werden kann. Durch die vorteilhafte Ausgestaltung als Walze kann diese mit dem sich bewegenden Schlamm mitbewegt werden, so daß kein Aufschieben oder Stauen des Schlamms erfolgt. Günstigerweise kann die Belastung, die die Walze auf den Schlamm ausübt, verstellbar ausgestaltet sein, indem z.B. die Walze vorteilhaft hohl ausgestaltet wird, so daß sie z.B. mit Wasser zur Erhöhung ihres Eigengewichts gefüllt werden kann. In weiterer günstiger Ausgestaltung der Erfindung sind Greifer vorgesehen, die stationär so angeordnet sind, daß sie durch die Drehung der Siebfläche in den Schlamm eingreifen und diesen durchmischen oder auflockern, wodurch z.B. eingeschlossenes und schon abgetrenntes Wasser freigelegt wird und abgeschieden werden kann. Durch diese Umschichtung des Schlammes wird also die Menge des abgeschiedenen Wassers erhöht.

Im folgenden wird die Erfindung anhand zeichnerischer Darstellungen näher erläutert. Es zeigen
- **Figur 1**: eine perspektivische, schematische Darstellung der erfindungsgemäßen Vorrichtung;
- **Figur 2**: eine Draufsicht auf die Vorrichtung von Figur 1, wobei der Schnitt unmittelbar unterhalb des Deckels parallel zu diesem liegt;
- **Figuren 3a ―3c**: Darstellungen der Walze;
- **Figur 4**: Greifer, die in den Schlamm eingreifen.

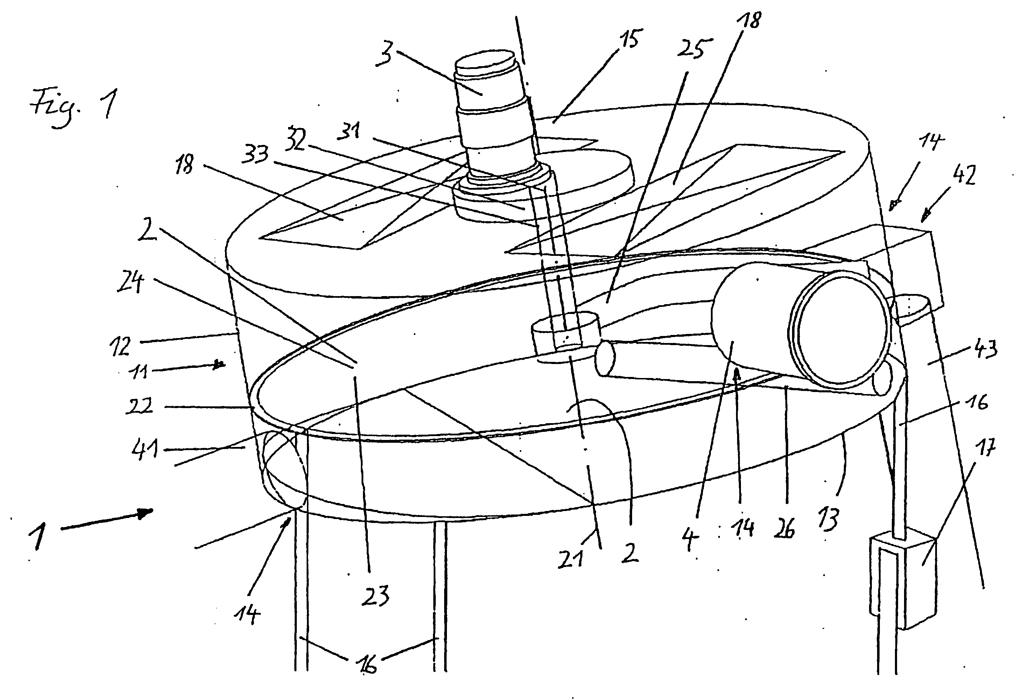

Figur 1 zeigt die erfindungsgemäße Vorrichtung 1 schematisch in perspektivischer Darstellung. Die Vorrichtung 1 besteht aus einem Behälter 11 mit einer Seitenwand 12 und mit einem Deckel 15, der den Behälter 11 nach oben abschließt. Die Vorrichtung 1 wird über Stützen 16, die am Behälter 11 angeordnet sind, getragen. Der Behälter 11 besitzt im wesentlichen drei Durchbrechungen 14, über die er mit Schlamm beschickt wird und Ober die das abgetrennte Wasser und der Restschlamm entsorgt werden. Die gegenüber der Entnahme 41 für abgetrenntes Wasser angeordnete Stütze 16 besitzt eine Verstellvorrichtung 17 mit deren Hilfe die Länge dieser Stütze 16 verändert werden kann. Dadurch wird insgesamt die Vorrichtung 1 in Richtung der Entnahme 41 für abgetrenntes Wasser geneigt Die Achse 21 erhält entsprechend dadurch eine Neigung zur Horizontalen. In der Ausführungsform von Figur 1 sind am Behälter 11 drei Stützen angebracht, wodurch die Vorrichtung 1 trotz Verstellbarkeit sicher aufgestellt werden kann. Vorteilhaft (nicht gezeigt) können eine oder mehrere der Stützen auf Vibratoren befestigt oder damit verbunden sein. Möglich ist auch nur das Sieb in Schwingung zu versetzen.

Im Inneren des Behälters 11 befindet sich die Siebfläche 2, die senkrecht zur Achse 21 verläuft und kreisförmig ausgebildet ist. Der Innendurchmesser des Behälters 11 ist im wesentlichen gleich dem Außendurchmesser der kreisförmigen Siebfläche 2, so daß die Siebfläche 2 das Innere des Behälters 11 in zwei Bereiche, einen oberhalb der Ebene der Siebfläche 2 und einen unterhalb der Siebfläche 2, teilt. Die Siebfläche 2 besteht aus einer Trägerfläche 23, die mit einem Sieb 24 belegt ist.

Die Siebfläche 2 ist mit einer in ihrem Zentrum angeordneten Welle 31 fest verbunden. Die Welle 31 hat die Aufgabe die Siebfläche 2 sowohl zu lagern als auch in Drehung zu versetzen. Dazu ist die Welle 31 im Bereich des Deckels 15 befestigt und drehbar gelagert und gleichzeitig mit einer Antriebsvorrichtung 3, im Ausführungsbeispiel von Figur 1 mit einem Elektromotor, verbunden. Dieser erzeugt eine Drehbewegung über ein Getriebe 32, das die Drehzahl des Motors reduziert an die Welle 31 übergibt. Im Bedarfsfall kann die Welle 31 auch durch die Siebfläche 2 hindurch bis zum Boden des Behälters 13 geführt werden, wo sie ebenfalls zusätzlich noch geführt und gelagert werden kann. Im Bereich des Randes 22 ist die Siebfläche 2 mittels einer Spaltdichtung gegenüber der Innenwand des Behälters 11 abgedichtet. Ebensogut kann es aber, was in Figur 1 nicht dargestellt ist, auch möglich sein die Siebfläche 2 im Bereich ihres Randes 22 an der Innenwand des Behälters 11 zu lagern oder zu führen. Es ist auch denkbar die Siebfläche in diesem Bereich anzutreiben. Die Welle 31 wird von einer Hülse 33 umgeben, die sich selbst nicht dreht, sondern eine Halterung für den Abstreifer 25 bildet. Der Deckel 15 besitzt auf seiner Oberseite 2 Revisionsöffnungen 18.

Das Ausführungsbeispiel der Erfindung, die Vorrichtung 1 von Figur 1, arbeitet folgendermaßen. Über die Zuführung 4, die im wesentlichen als Rohrstutzen ausgebildet ist, an den sich eine Leitung (nicht gezeigt) anschließt, wird in den Behälter 11 der Vorrichtung 1 Schlamm eingebracht, der mit Flockungshilfsmitteln konditioniert ist. Dünnschlamm wird, wie im Stand der Technik bekannt, mit diesen Flockungshilfsmitteln behandelt, um eine bessere Abtrennung von Wasser aus dem Schlamm zu gewährleisten. Der konditionierte Dünnschlamm wird über die Zuführung 4 auf die Oberseite der Siebfläche 2 aufgebracht, wo er sich auf dieser ablagert. Die Siebfläche 2 befindet sich in Drehung, so daß der Schlamm, falls er nicht selbständig abfließt, aus dem Bereich der Zuführung 4 wegbefördert wird. Die Förderrichtung wird durch die Drehrichtung der Siebfläche 2 bestimmt, die, von der Antriebsvorrichtung 3 aus betrachtet, eine Rechtsdrehung vollführt. Der zwischen Zuführung 4 und Hülse 33 befindliche Schlamm wird also in Richtung auf die Entnahme 41 befördert. Sobald der Schlamm auf die Siebfläche 2 aufgebracht ist, findet eine Entwässerung statt, da das Wasser, bzw. die Flüssigkeit im Schlamm, durch die Öffnungen der Microsieb-Bespannung und die Öffnungen (nicht sichtbar) des Lochbleches hindurch die Siebfläche nach unten infolge der Schwerkraft verläßt. Im Bereich oberhalb der Entnahme 41 für abgetrenntes Wasser kann sich auf der Siebfläche 2 infolge der Schrägstellung der Vorrichtung 1 zunächst vermehrt Schlamm anhäufen, der infolge der Drehbewegung der Siebfläche 2 wieder mitgenommen wird und sich in einer Schicht auf der Siebfläche 2 anlagert und von dieser dann in Richtung der Abführung 42 für den entwässerten Schlamm transportiert wird. Während des gesamten Transportweges des Schlamms wird diesem Wasser entzogen, das sich unterhalb der Siebfläche 2 im Behälter 11 ansammelt. Das angesammelte Wasser wird über die Entnahme 41 kontinuierlich aus der Vorrichtung 1 über eine Rohrleitung (nicht gezeigt) entnommen.

Auf dem Transportweg des Schlamms, von der Zuführung 4 bis zur Abführung des entwässerten Schlamms 42, können Greifer vorgesehen sein, die in die Schlammschicht auf der Siebfläche 2 eingreifen und diese, wie aus dem Stand der Technik bekannt, durchmischen bzw. umschichten, um die Abscheidung des Wassers aus dem Schlamm zu verbessern. Durch diese Maßnahme kann bereits abgetrenntes Wasser, das sich jedoch auf der Oberfläche des Schlamms abgesetzt hat, so wieder unter den Schlamm gemischt werden, damit das Wasser durch die Siebfläche 2 abgeführt werden kann. Bei seinem Weitertransport gelangt der Schlamm in den Bereich des Abstreifers 25, der vom Zentrum der Siebfläche 2 bis wenigstens bis zu ihrem äußeren Rand verläuft. Der Abstreifer 25 besitzt eine gebogene Form, dessen Außenseite vom antransportierten Schlamm beaufschlagt wird wodurch dieser, entlang der Außenseite des Bogens in den Bereich des Randes der Siebfläche 2 führt wird. Der derart in den Außenbereich der Siebfläche 2 geführte, entwässerte Schlamm verläßt den Behälter 11 über die Abführung 42, die an einer Durchbrechung 14 des Behälters 11 beginnt. Der entwässerte Schlamm wird also vom Abstreifer 25 von der Oberfläche der Siebfläche 2 abgenommen und der Abführung 42 für entwässerten Schlamm zugeführt und über eine Rohrleitung 43 aus der Vorrichtung 41 ausgeleitet. An die Rohrleitung 43 kann eine Dickschlammförderpumpe (nicht gezeigt) angeschlossen sein, die den Schlamm weiterbefördert.

Zwischen dem Abstreifer 25 und der Zuführung 4 für Schlamm ist eine Reinigungsvorrichtung 26 angeordnet, die die Siebfläche 2 bzw. deren Sieb, z.B. die Microsieb-Bespannung, wieder reinigt, damit deren Fähigkeit zum Abscheiden von Flüssigkeit aus dem Schlamm nicht durch Verschmutzung eingeschränkt ist. Die Reinigungsvorrichtung 26 ist als Spritzdüsensystem ausgebildet, das die Siebfläche 2 von unten mittels Wasser besprüht, um Verschmutzungen aus dem Sieb herauszuspülen. Die Reinigungsvorrichtung 26 erstreckt sich radial von der Welle 31 bis zur Wand des Behälters 11, so daß die gesamte Arbeitsbreite der Siebfläche vor dem Auftragen von neuem Schlamm über die Zuführung 4 gereinigt wird. Das Spritzdüsensystem der Reinigungsvorrichtung 26 kann mit Frischwasser betrieben werden, Günstig ist es jedoch, wenn diese mit dem abgetrennten Wasser aus der Vorrichtung 1 betrieben wird. Dazu wird dieses mittels einer nicht gezeigten Pumpe der Reinigungsvorrichtung zugestellt. Das Reinigen der Siebfläche 2 kann kontinuierlich erfolgen oder auch diskontinuierlich, je nach den Erfordernissen und Verschmutzungen des Siebes der Siebfläche 2.

In weiterer vorteilhafter Ausgestaltung kann die Vorrichtung 1 noch mit einer Walze oder einer andersartig ausgebildeten Belastungsvorrichtung versehen sein, die, bevor der Schlamm den Abstreifer 25 erreicht, diesen berührt oder belastet, um zusätzlich zur statischen Entwässerung eine infolge von Druck erzwungene Entwässerung zu erreichen. Eine solche Walze (nicht gezeigt) erstreckt sich vom Bereich des Mittelpunktes der Siebfläche 2 radial nach außen bis in etwa zur Wandung des Behälters 11. Die Walze ist drehbar gelagert, so daß sie durch den sie berührenden Schlamm in Drehbewegung versetzt wird. Dadurch wird erreicht, daß sich der Schlamm nicht an der Walze aufstaut, sondern zwischen Walze und Siebfläche 2 durchgeführt wird. Die Andrückkraft der Walze ist variabel einstellbar, beispielsweise durch Erhöhung des Eigengewichts der Walze, um je nach Bedarf den Schlamm mit unterschiedlicher Kraft zu belasten. Um allzu große Relativbewegungen zwischen Schlamm und Walze zu verhindern, kann diese auch längs ihrer Drehachse in unterschiedliche, unabhängig voneinander drehbare Abschnitte unterteilt sein, um die Umfangsgeschwindigkeit der Walze mit der Transportgeschwindigkeit des transportierten Schlammes abzugleichen. Die Oberfläche der Walze kann einfach in Form einer Zylinderoberfläche oder auch einer Kegeloberfläche, wegen deren besseren Abrollverhältnissen, ausgestaltet sein. Es kann auch die Oberfläche mit Zapfen oder Riefen versehen sein, um tiefer in den Schlamm einzudringen.

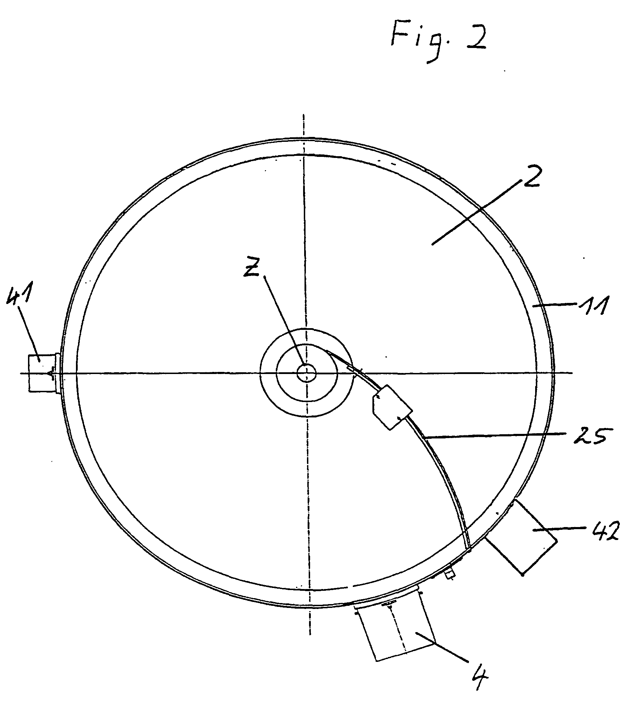

Die Draufsicht von Figur 2 zeigt die Siebfläche 2 über der der Abstreifer 25 angeordnet ist. Bei ihrer Drehung im Uhrzeigersinn nimmt die Siebfläche 2 den über die Zuführung zugeführten Schlamm mit und führt ihn bis zum Abstreifer 25, wo der entwässerte Schlamm die Siebfläche 2 über die Abführung 42 wieder verläßt. Die Reinigungsvorrichtung 26 (vergl. Figur 1) ist in Figur 2 nicht dargestellt. Der Abstreifer 42 beginnt im Bereich des Zentrums Z und erstreckt sich bogenförmig bis zur Wandung des Behälters 11. Durch die Drehbewegung der Siebfläche wird der entwässerte Schlamm entlang des Abstreifers 25 vom Zentrum Z in Richtung der Wandung des Behälters 11 geführt, den er über die Abführung 42 wieder verläßt.

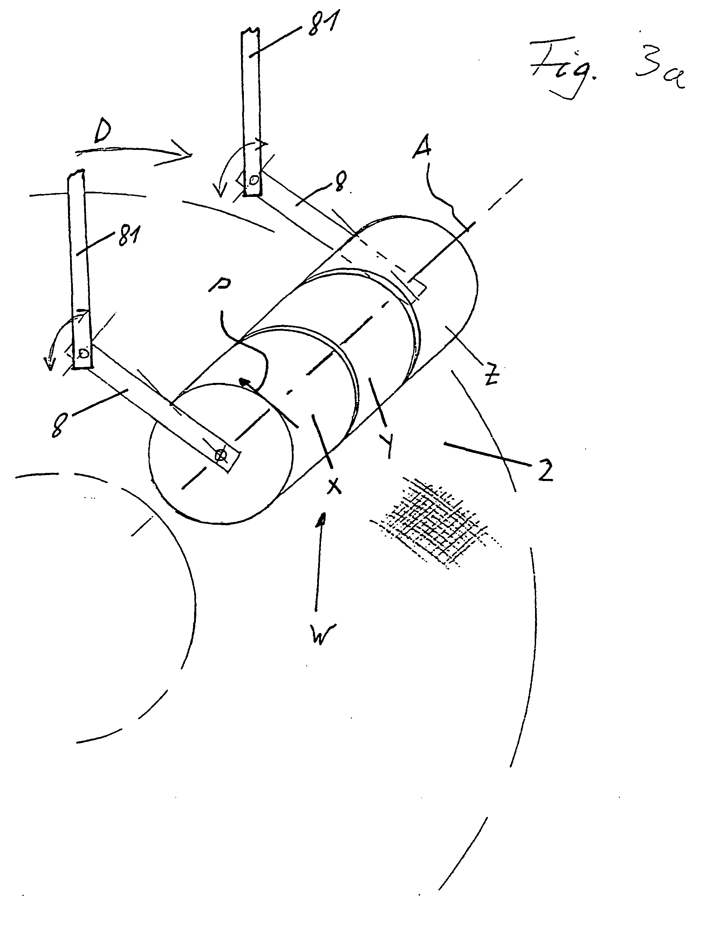

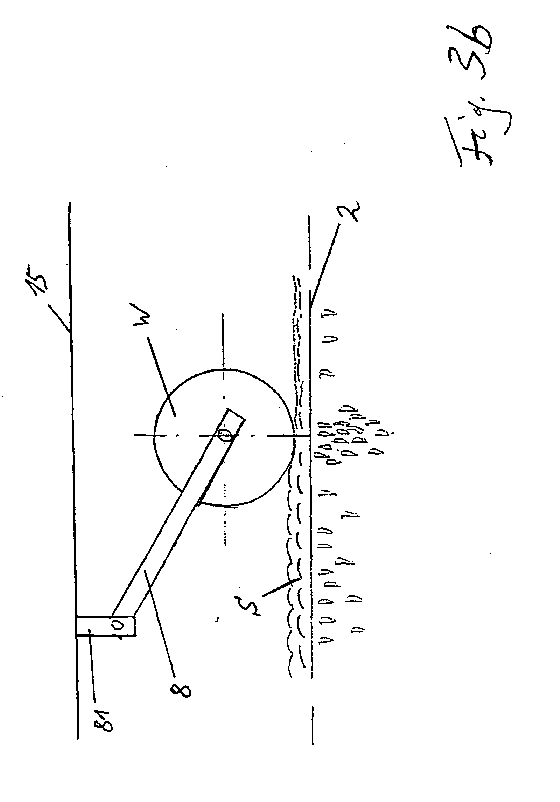

Figur 3a zeigt in schematischer Darstellung eine Walze W, die auf dem Schlamm, der auf der Siebfläche 2 liegt, mit ihrem Eigengewicht aufliegt, oder mittels Hilfsmitteln auf diesen aufgedrückt werden kann. Durch Drehung der Siebfläche 2 und dem von der Siebfläche 2 transportierten Schlamm wird die Walze W ihrerseits in Drehung versetzt. Die Walze selbst besitzt in axialer Richtung mehrere Einzelabschnitte X, Y und Z, um die unterschiedlichen Umfangsgeschwindigkeiten der Siebfläche 2 ausgleichen zu können. Die einzelnen Einzelabschnitt X, Y und Z sind gegeneinander mittels Dichtungen abgedichtet, die eine sehr geringe Oberflächenhaftung besitzen. Die Drehrichtung D der Siebfläche 2 bewirkt bei den Einzelabschnitten X, Y, Z der Walze W eine Drehung um die Achse A in Richtung des Pfeiles P jeweils mit unterschiedlichen Geschwindigkeiten. Durch den Druck der Walze W auf den Schlamm wird dessen Entwässerung verbessert. Die Walze W ist über Halter 8 schwenkbar an den am Deckel der Vorrichtung befestigten Stangen 81 gehalten.

Figur 3b zeigt schematisch die Auflage der Walze W auf der Siebfläche 2 im Schnitt. Am Deckel 15 sind Stangen 81 befestigt, die die Halter 8 schwenkbar lagern. Durch die Auflage der Walze W auf dem Schlamm S wird im Bereich der Auflage der Walze verstärkt Flüssigkeit abgeschieden, die durch die Siebfläche 2 hindurchtropft.

Figur 3c zeigt schematisch eine konische Walze W, die aufgrund dieser Ausgestaltung einteilig ausgebildet ist, da die Umfangsgeschwindigkeiten an den verschiedenen Durchmessern der Walze jeweils den Umfangsgeschwindigkeiten der Siebfläche 2 angepaßt sind. Die Drehachse der Walze ist dementsprechend geneigt zur Oberfläche der Siebfläche 2. Entsprechend, wie bei Figur 3b dargestellt, ist die Walze W über Halter 8 und nicht dargestellte Stangen 81 gehalten.

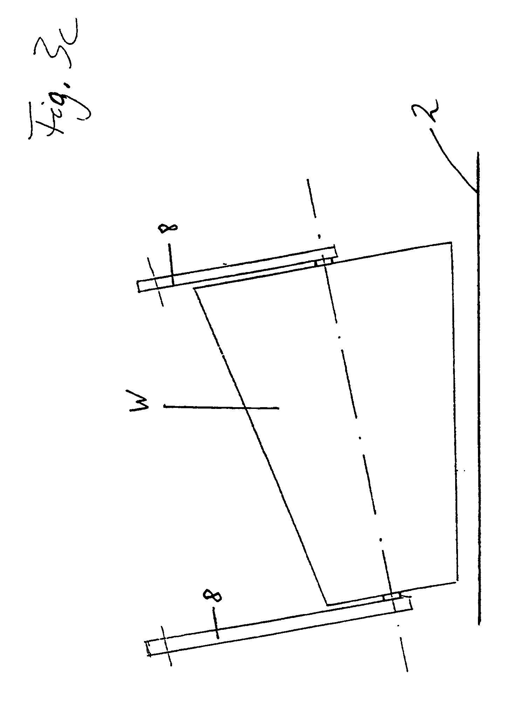

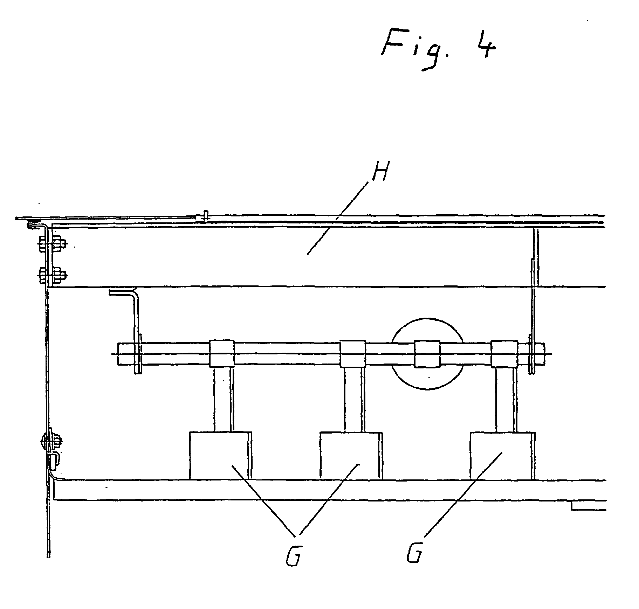

Figur 4 zeigt Greifer G, die in den Schlamm eingreifen. Diese sind an einem Halter H angeordnet, der sie stationär in der Vorrichtung festhält, während der Schlamm an ihnen vorbeigeführt wird. Dabei wirken die Greifer auf den Schlamm, ähnlich einer Egge für die Bodenbearbeitung, ein.

## Patentansprüche

1. Vorrichtung (1) zum Entwässern von Schlamm, insbesondere Dünnschlämmen, die beispielsweise beim Betrieb von Kläranlagen anfallen, mittels einer Siebfläche (2) zur Aufnahme des Schlammes, wobei die Siebfläche Öffnungen für den Durchtritt von Flüssigkeit besitzt, die Siebfläche (2) im wesentlichen kreisförmig ausgebildet ist und um eine senkrecht zur Siebfläche verlaufende Achse (21) drehbar ist, **dadurch gekennzeichnet, daß** die Achse (21), um die sich die Siebfläche (2) dreht, im Verhältnis zur Horizontalen geneigt ist, und die Vorrichtung (1) einen Behälter (11) mit wenigstens einer Seitenwand (12) und einem Boden (13) besitzt, in dem die Siebfläche (2) drehbar angeordnet ist.

2. Vorrichtung nach Anspruch 1, **dadurch gekennzeichnet, daß** die Vorrichtung (1) eine Antriebsvorrichtung (3) zum Drehen der Siebfläche (2) besitzt.

3. Vorrichtung nach einem oder beiden der Ansprüche 1 und 2, **dadurch gekennzeichnet, daß** die Siebfläche (2) eine senkrecht zur Siebfläche (2) angeordnete Welle (31) besitzt, über die sie gelagert und/oder von der Antriebsvorrichtung (3) in Drehung versetzt wird.

4. Vorrichtung nach einem oder mehreren der Ansprüche 1 bis 3, **dadurch gekennzeichnet, daß** die Siebfläche (2) über ihren Rand (22) drehbar gelagert und/oder von der Antriebsvorrichtung (3) in Drehung versetzt wird.

5. Vorrichtung nach einem oder mehreren der Ansprüche 1 bis 4, **dadurch gekennzeichnet, daß** die Vorrichtung (1) eine Zuführung (4) für Schlamm und eine Entnahme (41) für abgetrenntes Wasser und eine Abführung (42) für entwässerten Schlamm besitzt.

6. Vorrichtung nach Anspruch 5, **dadurch gekennzeichnet, daß** die Zuführung (4) für Schlamm oberhalb der Siebfläche (2) und die Entnahme (41) für abgetrenntes Wasser unterhalb der Siebfläche (2) angeordnet ist.

7. Vorrichtung nach Anspruch 5 oder 6, **dadurch gekennzeichnet, daß** die Zuführung (4) und die Entnahme (41) und/oder die Abführung (42) über den Umfang der Siebfläche (2) verteilt angeordnet sind.

8. Vorrichtung nach einem oder mehreren der Ansprüche 1 bis 7, **dadurch gekennzeichnet, daß** der Behälter (11) Durchbrechungen (14) für den Durchtritt von Zuführung und Entnahme und/oder Abführung besitzt.

9. Vorrichtung nach einem oder mehreren der Ansprüche 1 bis 8, **dadurch gekennzeichnet, daß** der Behälter (11) einen Deckel (15) besitzt.

10. Vorrichtung nach Anspruch 9, **dadurch gekennzeichnet, daß** die Welle (31) und/oder die Antriebsvorrichtung (3) über den Deckel (15) gelagert ist.

11. Vorrichtung nach einem oder mehreren der Ansprüche 1 bis 10, **dadurch gekennzeichnet, daß** der Behälter (11) im Verhältnis zur Horizontalen schwenkbar ausgebildet ist zur Einstellung der Neigung der Achse (21) der Siebfläche (2).

12. Vorrichtung nach einem oder mehreren der Ansprüche 1 bis 11, **dadurch gekennzeichnet, daß** am Behälter (11) Stützen (16) zur Lagerung der Vorrichtung angeordnet sind, von denen wenigstens eine zur Einstellung der Neigung der Achse (21) der Siebfläche (2) verstellbar ausgebildet ist.

13. Vorrichtung nach Anspruch 12, **dadurch gekennzeichnet, daß** wenigstens eine der Stützen (16) derart in ihrer Länge verstellbar ist, daß die Neigung der Achse (21) der Siebfläche (2) zwischen 0° und 30° zur Senkrechten einstellbar ist.

14. Vorrichtung nach einem oder mehreren der Ansprüche 1 bis 13, **dadurch gekennzeichnet, daß** die Siebfläche (2) aus einer Trägerfläche (23) besteht, die mit einem Sieb (24) belegt ist.

15. Vorrichtung nach Anspruch 14, **dadurch gekennzeichnet, daß** das Sieb (24) als Microsieb-Bespannung ausgebildet ist.

16. Vorrichtung nach Anspruch 14, **dadurch gekennzeichnet, daß** das Sieb (24) als Polyestertuch-Bespannung oder als Spaltsieb ausgebildet ist.

17. Vorrichtung nach einem oder mehreren der Ansprüche 14 bis 16, **dadurch gekennzeichnet, daß** die Trägerfläche (23) als Lochblech ausgebildet ist.

18. Vorrichtung nach einem oder mehreren der Ansprüche 1 bis 17, **dadurch gekennzeichnet, daß** wenigstens das Lochblech der Vorrichtung (1) aus korrosionsfestem Material, z.B. korrosionsfestem Stahl ausgebildet ist.

19. Vorrichtung nach einem oder mehreren der Ansprüche 1 bis 18, **dadurch gekennzeichnet, daß** der Siebfläche (2) ein Abstreifer (25) zugeordnet ist zum Abstreifen des entwässerten Schlamms von der Siebfläche (2).

20. Vorrichtung nach Anspruch 19, **dadurch gekennzeichnet, daß** der Abstreifer (25) Bürsten und/oder eine Abstreiflippe, z.B. aus Gummi oder Kunststoff, besitzt.

21. Vorrichtung nach einem oder mehreren der Ansprüche 1 bis 20, **dadurch gekennzeichnet, daß** der Siebfläche (2) eine Reinigungsvorrichtung (26) zugeordnet ist.

22. Vorrichtung nach Anspruch 21, **dadurch gekennzeichnet, daß** die Reinigungsvorrichtung als Spritzdüsensystem ausgebildet ist.

23. Vorrichtung nach Anspruch 21 oder 22, **dadurch gekennzeichnet, daß** die Reinigungsvorrichtung (26), in Richtung der Bewegung der zu reinigenden Siebfläche (2) betrachtet, vor der Zuführung (4) für Schlamm angeordnet ist.

24. Vorrichtung nach einem oder mehreren der Ansprüche 21 bis 23, **dadurch gekennzeichnet, daß** die Reinigungsvorrichtung (26) unterhalb der Siebfläche (2) angeordnet ist.

25. Vorrichtung nach einem oder mehreren der Ansprüche 1 bis 24, **dadurch gekennzeichnet, daß** der Siebfläche (2) eine Walze (W), die z.B. kegelförmig ausgebildet ist, für die Belastung des Schlamms zugeordnet ist.

26. Vorrichtung nach Anspruch 25, **dadurch gekennzeichnet, daß** die Belastung des Schlamms durch die Walze (W) verstellbar ist.

27. Vorrichtung nach einem oder mehreren der Ansprüche 1 bis 26, **dadurch gekennzeichnet, daß** Greifer (G) vorgesehen sind, die stationär angeordnet sind und durch die Drehung der Siebfläche (2) den Schlamm durchmischen oder auflockern.

## Claims

1. A device (1) for dehydrating sludge, especially dilute sludges that accumulate, e.g., during the operation of sewage treatment plants, by means of a sieve surface (2) for receiving the sludge, which sieve surface has openings for the passage of liquid, the sieve surface (2) is designed substantially circularly and can be rotated about an axis (21) running vertically to the sieve surface, **characterized in that** the axis (21) of the sieve surface (2) is inclined relative to a horizontal line and **in that** the device (1) comprises a container (11) with at least one side wall (12) and a bottom (13) in which the sieve surface (2) is arranged rotatably.

2. The device according to claim 1, **characterized in that** the device (1) comprises a drive device (3) for rotating the sieve surface (2).

3. The device according to one or both of claims 1 and 2, **characterized in that** the sieve surface (2) comprises a shaft (31) arranged vertically to the sieve surface (2) by means of which shaft it is supported and/or caused to rotate by the drive device (3).

4. The device according to one or more of claims 1 to 3, **characterized in that** the sieve surface (2) is rotatably supported by its edge (22) and/or is caused to rotate by the drive device (3).

5. The device according to one or more of claims 1 to 4, **characterized in that** the device (1) comprises a supply line (4) for sludge and an outlet (41) for separated water and a discharge (42) for dehydrated sludge.

6. The device according to claim 5, **characterized in that** the supply line (4) for sludge is arranged above the sieve surface (2) and that the outlet (41) for separated water is arranged below the sieve surface (2).

7. The device according to claim 5 or 6, **characterized in that** the supply line (4) and the outlet (41) and/or the discharge (42) are arranged distributed over the circumference of the sieve surface (2).

8. The device according to one or more of claims 1 to 7, **characterized in that** the container (11) comprises perforations (14) for the passage of supply and outlet and/or discharge.

9. The device according to one or more of claims 1 to 8, **characterized in that** the container (11) comprises a cover (15).

10. The device according to claim 9, **characterized in that** the shaft (31) and/or the drive device (3) is/are mounted above the cover (15).

11. The device according to one or more of claims 1 to 10, **characterized in that** the container (11) is designed so that it can pivot relative to a horizontal line in order to adjust the inclination of the axis (21) of the sieve surface (2).

12. The device according to one or more of claims 1 to 11, **characterized in that** supports (16) for supporting the device are arranged on the container (11), at least one of which supports is adjustably designed in order to adjust the inclination of the axis (21) of the sieve surface (2).

13. The device according to claim 12, **characterized in that** at least one of the supports (16) can be adjusted in such a manner in its length that the inclination of the axis (21) of the sieve surface (2) can be adjusted between 0° and 30° to a vertical line.

14. The device according to one or more of claims 1 to 13, **characterized in that** the sieve surface (2) consists of a carrier surface (23) covered with a sieve (24).

15. The device according to claim 14, **characterized in that** the sieve (24) is designed as a microsieve covering.

16. The device according to claim 14, **characterized in that** the sieve (24) is designed as a polyester cloth covering or as a wedge-wire screen [sieve].

17. The device according to one or more of claims 14 to 16, **characterized in that** the carrier surface (23) is designed as a perforated sheet.

18. The device according to one or more of claims 1 to 17, **characterized in that** at least the perforated sheet of the device (1) is formed from corrosion-resisting material, e.g., stainless steel (high-grade steel).

19. The device according to one or more of claims 1 to 18, **characterized in that** the sieve surface (2) is associated with a wiper (25) for wiping the dehydrated sludge off of the sieve surface (2).

20. The device according to claim 19, **characterized in that** the wiper (25) comprises brushes and/or a wiper lip made, e.g., of rubber or plastic.

21. The device according to one or more of claims 1 to 20, **characterized in that** a cleaning device (26) is associated with the sieve surface (2).

22. The device according to claim 21, **characterized in that** the cleaning device is designed as a spray-jet system.

23. The device according to claim 21 or 22, **characterized in that** the cleaning device (26), viewed in the direction of movement of the sieve surface (2) to be cleaned, is arranged in front of the sludge feed (4).

24. The device according to one or more of claims 21 to 23, **characterized in that** the cleaning device (26) is arranged under the sieve surface (2).

25. The device according to one or more of claims 1 to 24, **characterized in that** a roller (W) that is, e.g., conically designed is associated with the sieve surface (2) for loading the sludge.

26. The device according to claim 25, **characterized in that** the loading of the sludge by the roller (W) can be adjusted.

27. The device according to one or more of claims 1 to 26, **characterized in that** grippers (G) are provided that are stationarily arranged and thoroughly mix or loosen the sludge by virtue of the rotation of the sieve surface (2).

## Revendications

1. Dispositif (1) pour le desséchage des boues, en particulier des pâtes crues fluides, qui sont produites par exemple lors du service des stations d'épuration, au moyen d'une surface criblante (2) pour l'accueil de la boue, sachant que la surface criblante comporte des ouvertures pour la traversée du liquide, que la surface criblante (2) se présente sous une forme essentiellement circulaire et qu'elle est rotative autour d'un axe (21) s'étendant perpendiculairement à la surface criblante (2), **caractérisé en ce que** l'axe (21) autour duquel tourne la surface criblante (2) est incliné par rapport à l'horizontale et que le dispositif (1) comporte un réservoir (11) avec au moins une paroi latérale (12) et un fond (13), sur lequel la surface criblante (2) est disposée de manière rotative.

2. Dispositif selon la revendication de brevet 1, **caractérisé en ce que** le dispositif (1) comporte un dispositif d'entraînement (3) pour l'entraînement en rotation de la surface criblante (2).

3. Dispositif selon l'une quelconque des deux revendications de brevet 1 et 2, **caractérisé en ce que** la surface criblante (2) comporte un arbre (31) s'étendant perpendiculairement à la surface criblante (2), sur lequel elle est logée et/ou par lequel elle est entraînée en rotation par le dispositif d'entraînement (3).

4. Dispositif selon l'une quelconque ou plusieurs des revendications de brevet 1 à 3, **caractérisé en ce que** la surface criblante (2) est logée en sa bordure (22) de manière rotative et/ou qu'elle est entraînée en rotation par le dispositif d'entraînement (3).

5. Dispositif selon l'une quelconque ou plusieurs des revendications de brevet 1 à 4, **caractérisé en ce que** le dispositif (1) comporte une arrivée (4) pour la boue et un prélèvement (41) pour l'eau de séparation et un écoulement (42) pour la boue desséchée.

6. Dispositif selon la revendication de brevet 5, **caractérisé en ce que** l'arrivée (4) pour la boue est disposée au-dessus de la surface criblante (2) et que le prélèvement (41) pour l'eau de séparation est disposé en deçà de la surface criblante (2).

7. Dispositif selon l'une ou l'autre des revendications de brevet 5 et 6, **caractérisé en ce que** l'arrivée (4) et le prélèvement (41) et/ou l'écoulement (42) sont répartis sur la circonférence de la surface criblante (2).

8. Dispositif selon l'une quelconque ou plusieurs des revendications de brevet 1 à 7, **caractérisé en ce que** le réservoir (11) der perforations (14) pour le passage la boue d'arrivée ou de prélèvement et/ou d'écoulement.

9. Dispositif selon l'une quelconque ou plusieurs des revendications de brevet 1 à 8, **caractérisé en ce que** le réservoir (11) comporte un couvercle (15).

10. Dispositif selon la revendication de brevet 9, **caractérisé en ce que** l'arbre (31) et/ou le dispositif d'entraînement (3) sont logés par le couvercle (15).

11. Dispositif selon l'une quelconque ou plusieurs des revendications de brevet 1 à 10, **caractérisé en ce que** le réservoir (11) se présente sous une forme basculante par rapport à l'horizontale pour l'ajustage de l'inclinaison de l'axe (21) de la surface criblante (2).

12. Dispositif selon l'une quelconque ou plusieurs des revendications de brevet 1 à 11, **caractérisé en ce que** des appuis de stabilisation (16) sont disposés au réservoir (11) pour le logement du dispositif, dont l'un au moins se présente sous une forme ajustable pour l'ajustage de l'inclinaison de l'axe (21) de la surface criblante (2).

13. Dispositif selon la revendication de brevet 12, **caractérisé en ce que** l'un au moins des appuis de stabilisation (16) est ajustable en longueur de telle manière que l'inclinaison de l'axe (21) de la surface criblante (2) soit réglable entre 0° et 30° par rapport à la verticale.

14. Dispositif selon l'une quelconque ou plusieurs des revendications de brevet 1 à 13, **caractérisé en ce que** la surface criblante (2) se compose d'une surface porteuse (23), qui est dotée d'un crible (24).

15. Dispositif selon la revendication de brevet 14, **caractérisé en ce que** le crible (24) se présente sous la forme d'un tissu tendu microcriblant.

16. Dispositif selon la revendication de brevet 14, **caractérisé en ce que** le crible (24) se présente sous la forme d'un tissu tendu de polyester ou d'un crible à fentes.

17. Dispositif selon l'une quelconque ou plusieurs des revendications de brevet 14 à 16, **caractérisé en ce que** la surface porteuse (23) se présente sous la forme d'une surface perforée.

18. Dispositif selon l'une quelconque ou plusieurs des revendications de brevet 1 à 17, **caractérisé en ce qu'**au moins la tôle perforée du dispositif (1) en réalisée en un matériau résistant à la corrosion, par exemple en acier résistant à la corrosion.

19. Dispositif selon l'une quelconque ou plusieurs des revendications de brevet 1 à 18, **caractérisé en ce qu'un** racloir (25) est assigné à la surface criblante (2) pour le raclage de la boue desséchée de la surface criblante (2).

20. Dispositif selon la revendication de brevet 19, **caractérisé en ce que** le racloir (25) comporte des brosses et/ou une lèvre de raclage, par exemple en caoutchouc ou en matière synthétique.

21. Dispositif selon l'une quelconque ou plusieurs des revendications de brevet 1 à 20, **caractérisé en ce qu'**un dispositif de nettoyage (26) est assigné à la surface criblante (2).

22. Dispositif selon la revendication de brevet 21, **caractérisé en ce que** le dispositif de nettoyage se présente sous la forme d'un système de gicleurs.

23. Dispositif selon l'une ou l'autre des revendications de brevet 21 et 22, **caractérisé en ce que** le dispositif de nettoyage (26), vu dans le sens du déplacement de la surface criblante (2) à nettoyer, est disposé en amont de l'arrivé (4) pour la boue.

24. Dispositif selon l'une quelconque ou plusieurs des revendications de brevet 21 à 23, **caractérisé en ce que** le dispositif de nettoyage (26) est disposé en deçà de la surface criblante (2).

25. Dispositif selon l'une quelconque ou plusieurs des revendications de brevet 1 à 24, **caractérisé en ce qu'**un cylindre (W), se présentant par exemple sous forme conique, est assigné à la surface criblante (2) pour exercer une charge sur la boue.

26. Dispositif selon la revendication de brevet 25, **caractérisé en ce que** l'application de la charge sur la boue par le cylindre (W) est réglable.

27. Dispositif selon l'une quelconque ou plusieurs des revendications de brevet 1 à 26, **caractérisé en ce que** des ramasseurs (G) sont prévus, qui sont disposés de manière stationnaire et qui, par la rotation de la surface criblante (2), mélangent intimement ou désagrègent la boue.
